# EUROPEAN PATENT APPLICATION

(11) **EP 4 814 709 A1**
(43) Date of publication of application: **30.09.2026**
(21) Application number: 25166792.9
(22) Date of filing: 27.03.2025
(51) Int. Cl.: G06F 9/30, G06F 15/78

(54) **ADJUSTABLE HARDWARE UTILISATION LIMITER FOR DYNAMIC LOAD MANAGEMENT OF IN-MEMORY COMPUTING SYSTEMS**

(71) Applicant: Axelera AI BV, 5656 AE Eindhoven (NL)
(72) Inventor: Hager, Pascal, 5656 AE Eindhoven (NL); Cosemans, Stefan, 5656 AE Eindhoven (NL); Uytterhoeven, Roel, 5656 AE Eindhoven (NL); Khov, Gua Hao, 5656 AE Eindhoven (NL); Hütter, Noah, 5656 AE Eindhoven (NL)
(74) Representative: E. Blum & Co. AG

(57) **Abstract**

The invention notably concerns computer-implemented methods of dynamically managing a load of an in-memory computing (IMC) device (10), which has a crossbar array structure of cells configured to store weight values. The method operates the IMC device according to a stream of control instructions (1812) to perform operation cycles, whereby matrix-vector multiplication (MVM) operations are carried out through the crossbar array structure in accordance with weight values stored in the cells. The method monitors operation conditions (1812) of the IMC device and injects no-operation instructions (1844) into the stream of control instructions at a rate determined in accordance with the monitored operation conditions, whereby each operation cycle contains either zero or one MVM operation. This approach reduces power consumption and thermal output without significantly impacting performance. This makes it possible to lower overprovisioning requirements, allowing more cost-effective IMC devices. The invention further concerns related IMC systems and computer program products.

## Description

### FIELD OF INVENTION

The present disclosure is directed to techniques (computer-implemented methods, in-memory computing systems, and computer program products) of dynamic load management of in-memory computing (IMC) devices and systems. In particular, it concerns a method injecting no-operation instructions into the stream of control instructions of an IMC device, at a rate determined in accordance with the monitored operation conditions, to lower the effective temporal utilization of the IMC device and hence its electric current consumption (i.e., power consumption).

### BACKGROUND

Computing systems have emerged as a promising solution for accelerating computational tasks by integrating processing capabilities directly within memory structures. This approach addresses the limitations of traditional computing architectures, such as the Von-Neumann bottleneck, by enabling efficient operations. However, the high computational throughput of these systems, while beneficial for performance, can pose significant challenges in terms of power consumption and thermal management.

A matrix-vector-multiplication (MVM) engine based on an in-memory computing (IMC) device can compute matrix-matrix multiplications by storing one matrix in the IMC memory space, while feeding the other matrix to the IMC, one column at a time (i.e., by feeding one vector at a time), so as to compute the resulting matrix row-by-row. Examples of highly efficient IMC devices and systems are for instance described in, e.g., WO2023117081A1, WO2023193899A1, WO2024067954A1, and WO2024183892A1.

Computing fast and efficient matrix-matrix operations is key to build hardware accelerators for artificial intelligence (AI) workloads as those workloads are internally dominated by matrix-vector multiplications. A performant IMC unit can provide a peak compute throughput of tens-to-hundreds of tera operations per second (TOPS), while at the same time maintaining a very high compute efficiency (1 - 10 TOPS/W). However, despite its efficiency, the absolute power consumed by one IMC unit capable of providing tens-to-hundreds peak TOPS can reach several watts. As the present inventors observed, this causes several challenges, such as:
- Large supply current transients, which occurs when the IMC unit starts and stops performing operations, create demanding requirements for the supply regulators;
- Large current transients are also challenging for the power delivery and integrity, due to inductive parasitic on the supply wires, a voltage droop is introduced proportional to the current step, which can compromise the operation of the chip;
- The high absolute peak power is also challenging for device form factors with limited power supply capabilities (e.g., embedded devices or battery-operated devices); and
- The high absolute peak power further creates considerable heat in a short time period, which must be dissipated, posing challenges for packaging and cooling solutions.

Moreover, a chip may contain multiple IMC engines, which can independently turn ON and OFF, making the above challenges increasingly more complex.

Therefore, a solution addressing these challenges is needed, so as to enable the development of more efficient and cost-effective IMC systems, capable of handling diverse workloads.

### SUMMARY

According to a first aspect, the invention is embodied as a computer-implemented method of dynamically managing the load of an in-memory computing (IMC) device. The latter is assumed to include a crossbar array structure (i.e., a crossbar interconnect) of cells configured to store weight values. The method comprises operating the IMC device according to a stream of control instructions to perform operation cycles, whereby matrix-vector multiplication (MVM) operations are carried out through the crossbar array structure in accordance with weight values stored in the cells. The method monitors operation conditions of the IMC device and injects no-operation (NOP) instructions into the stream of control instructions. The NOP instructions are injected at a rate determined in accordance with the monitored operation conditions. As a result, each operation cycle of the IMC device contains either zero or one MVM operation.

Injecting NOP instructions into the instruction stream of the MVMs forces the crossbar array to "do nothing" during certain cycles (or, at least, not to compute any MVM during such cycles). By modifying the rate at which NOP instructions are injected into the control flow, the method can adjust the IMC device utilization and hence its electric current consumption (i.e., power consumption). The utilization of the crossbar array is typically adjusted by effectively limiting its utilization to lower the electric current consumption. This lowers overprovisioning requirements and, in turn, allows more cost-effective IMC devices to be built as the device no longer needs to be overprovisioned for worst-case scenarios, which rarely occur in practical workloads. So, the present approach does not substantially affect the overall performance of the IMC device- it impacts neither the frequency of the MVM cycles (some cycles do just not execute any MVMs) nor the fraction of the crossbar array utilized. Conversely, the MVM utilization may also be temporarily increased if the operation conditions permit it.

In preferred embodiments, monitoring the operation conditions comprises repeatedly estimating a spatiotemporal utilization of the crossbar array structure based on control instructions in the stream of control instructions. The spatiotemporal utilization includes a temporal average of a fraction of the crossbar array structure that is effectively utilized according to said control instructions. The operation conditions are monitored by monitoring the spatiotemporal utilization (as repeatedly estimated) against one or more threshold values. Thus, the rate at which the NOP instructions are injected depends on the monitored spatiotemporal utilization and the one or more threshold values. This temporal average serves as a proxy to estimate the instantaneous electric current consumption of the IMC device-such a quantity can adequately be used a reference to adjust the electric current consumption.

The spatiotemporal utilization of the crossbar array structure is preferably estimated thanks to a prediction model that uses the control instructions as input. The control instructions used by the prediction model as input correspond to one or more given time points, each corresponding to a respective cycle of the operation cycles. For example, use can be made of two or more input control instructions, corresponding to two or more respective time points. The prediction model preferably comprises a state-space model, and more preferably a discrete-time filter. Using such a prediction model proves beneficial for accurately estimating the instantaneous current consumption, even when using only a few control instructions as input. Indeed, estimating the instantaneous current consumption is usually difficult as this requires observations on a longer time scale, something that can hardly be reconciled with the notion of instantaneous measurement. Preferred models are state-space models, particularly discrete time-domain models, as such models are not compute-intensive and lend themselves well to real-time processing.

In particularly preferred embodiments, the prediction model comprises a discrete-time filter, whose time points correspond to respective operation cycles of the operation cycles. The discrete-time filter can be represented as a difference equation, which relates two or more output signals to one or more input signals. Each of the input signals corresponds to a spatial utilization of the crossbar array structure at a respective one of said time points (i.e., an instant spatial utilization). Each of the output signals corresponds to a temporal average estimated at a respective one of said time points. Still, two input signals correspond to distinct time points and, similarly, two output signals correspond to distinct time points, although the time points for input and output signals partially overlap, as usual with discrete-time filters. There are several advantages to use discrete time filters as defined above, particularly in terms of computational power, programming flexibility, and stability.

In embodiments, said difference equation includes, in addition to terms relating to said output signal and said input signal, one or more correction terms. The correction terms may notably include one or each of: (i) a correction term based on statistics of operands involved in the MVM operations; and (ii) one or more correction terms based on information extracted from the stream of control instructions. This makes it possible to more accurately estimate the electric current consumption.

In embodiments, the one or more threshold values include a maximal threshold value. So, the estimated spatiotemporal utilization is monitored against said maximal threshold value. The NOP instructions are injected according to a control loop ensuring that the estimated spatiotemporal utilization does not exceed the maximal threshold value. This control loop is optionally implemented by a fuzzy controller, a PID-controller, or a binary threshold controller. Being an instant average, the estimated spatiotemporal utilization anticipates, for a part, electric phenomena that are predicted to take place in the future. Thus, a control loop based on a spatiotemporal utilization as defined above can react ahead of time, e.g., before the current consumption becomes critical and the power budget is exceeded.

In embodiments, the spatiotemporal utilization is estimated at each operation cycle. In addition, the estimated spatiotemporal utilization is monitored against the one or more threshold values at each operation cycle. Moreover, the method further comprises, at each operation cycle, deciding whether to inject a NOP instruction into the stream of control instructions or not. This makes it possible to react as quickly as possible, based on most accurate estimations of the instant power consumption.

In embodiments, monitoring the operation conditions further comprises accessing physical quantities obtained from one or more sensors. In that case, the operation conditions monitored include the physical quantities accessed, in addition to the spatiotemporal utilization. The physical quantities include one or more of: a temperature of one or more components of the IMC device, an electric current consumption of the one or more components, and supply voltage levels for the one or more components. Such parameters can be used to provide a more complete view on the instant state of the IMC device and thus enable more accurate predictions.

All the more, such parameters can also be used to dynamically adjust the threshold values. That is, in preferred embodiments, the method further comprises repeatedly adjusting at least one of the one or more threshold values based on the physical quantities accessed. In addition, the method optionally comprises repeatedly adjusting at least one of the one or more threshold values based on inputs obtained from a user or a software.

According to another aspect, the invention is embodied as an IMC system. The IMC system comprises an IMC device having a crossbar array structure of cells configured to store weight values. It further comprises processing means operatively coupled to the crossbar array structure. The processing means are configured to operate the IMC device according to a stream of control instructions to perform operation cycles, whereby MVM operations are carried out through the crossbar array structure in accordance with weight values stored in the cells, in operation. The processing means are further configured to monitor operation conditions of the IMC device and inject NOP instructions into the stream of control instructions at a rate determined in accordance with the monitored operation conditions, whereby each operation cycle contains either zero or one MVM operation, in operation.

In embodiments, the processing means comprises a utilization estimator. The utilization estimator is configured to estimate a spatiotemporal utilization of the crossbar array structure, based on control instructions in the stream of control instructions. As explained above, the spatiotemporal utilization includes a temporal average of a fraction of the crossbar array structure that is effectively utilized according to said control instructions, in operation. The IMC system is configured to monitor the estimated spatiotemporal utilization against one or more threshold values, whereby the rate at which the NOP instructions are injected is determined in accordance with the monitored spatiotemporal utilization, in operation.

In embodiments, the processing means further comprises a utilization limiter. The utilization limiter is connected to both the utilization estimator and the crossbar array structure. The utilization limiter is configured to inject the NOP instructions into the stream of control instructions. In addition, the utilization limiter and the utilization estimator are jointly configured as a control loop, so as to ensure that the estimated spatiotemporal utilization does not exceed a maximal threshold value, in operation.

In embodiments, the processing means includes a central processing unit, the utilization limiter is implemented as a hardware component of the IMC device that is distinct from the central processing unit, in the interest of computation speed. In addition, the utilization estimator is preferably implemented as a hardware component of the IMC device that is distinct from each of the central processing unit and the utilization limiter, for similar reasons.

In embodiments, the utilization limiter is further connected to one or more sensors, so as to obtain one or more physical quantities from said sensors, whereby the operation conditions monitored include said one or more physical quantities, in operation. The one or more physical quantities include one or more of: a temperature of one or more components of the IMC device, an electric current consumption of the one or more components, and supply voltage levels for the one or more components.

According to a final aspect, the invention is embodied as a computer program product for dynamically managing the load of an IMC device, which has a crossbar array structure of cells configured to store weight values. The computer program product comprises a computer readable storage medium having program instructions embodied therewith. The program instructions are executable by processing means of the IMC device, to cause the processing means to operate the IMC device according to any embodiment of the method as described above.

### BRIEF DESCRIPTION OF DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:
FIG. 1 is a diagram illustrating the architecture of an in-memory compute (IMC) system, including an IMC device, processing units, sensors, and interfaces, as involved in embodiments. Some components are omitted, for clarity;
FIG. 2 shows an IMC device as involved in the system of FIG. 1. The figure focuses on the crossbar array structure (a crossbar interconnect) of the IMC device and neighboring components, such as the readout circuitry and the near-memory processing unit, as involved in embodiments;
FIG. 3 illustrates a crossbar array structure (a crossbar interconnect) of cells configured to store weight values, where each cell includes a memory system designed to store *K* weights, as in embodiments;
FIG. 4 is a flow chart illustrating a method for dynamically managing load in an IMC device, according to embodiments;
FIG. 5 is a diagram illustrating the utilization limiter logic of an MVM engine based on an IMC device such as shown in FIG. 1, as in embodiments;
FIG. 6 is a diagram illustrating how a utilization limit can be adjusted by an estimator for subsequent use by an MVM engine, as in embodiments;
FIGS. 7A - 7C exemplify the decomposition of a matrix-matrix multiplication by an IMC device, as in embodiments;
FIG. 8A is a graph illustrating the spatial utilization of an MVM engine over time, to perform an operation as in FIGS. 7A - 7C, highlighting peak and average utilization levels, as in embodiments. FIG. 8B illustrates the same, albeit with a utilization limit set by a limiter, as in embodiments; and
FIG. 9 is a block diagram illustrating a control mechanism for injecting NOP instructions based on spatial utilization and data value statistics in an IMC system, as in embodiments.

The accompanying drawings show simplified representations of devices or parts thereof, as involved in embodiments. Similar or functionally similar elements in the figures have been allocated the same numeral references, unless otherwise indicated.

Computerized devices, systems, methods, and computer program products embodying the present invention will now be described, by way of non-limiting examples.

### DETAILED DESCRIPTION

As noted in the background section, the high computational throughput of IMC systems poses significant challenges in terms of power consumption and thermal management. The fluctuating active area during computation cycles can lead to large supply current transients, which complicate power delivery and integrity. Additionally, the high peak power consumption can result in excessive heat generation, necessitating robust cooling solutions. As the present inventors came to conclude, this makes it difficult to design cost-effective systems without excessively overprovisioning for challenging scenarios.

Solutions have been proposed for conventional computers, which require substantial overprovisioning to accommodate peak power demands, leading to increased costs and inefficiencies. Such approaches often rely on throttling mechanisms. However, modifying the computation cycle frequency of an IMC device, whose core compute unit is a crossbar array, would pose serious problems. Therefore, the present inventors challenged themselves to devise an approach to better manage the utilization of IMC systems, with a view to reducing power consumption and thermal dissipation without significantly impacting performance. They came up with a solution that allows more efficient and cost-effective IMC systems, capable of handling diverse workloads without requiring excessive overprovisioning.

This solution revolves around dynamically adjusting the IMC load based on monitored operation conditions of the IMC devices, where the operation conditions notably include the MVM instructions. By injecting no-operation (NOP) instructions into the control flow, the method effectively reduces the temporal utilization of the IMC device, thereby lowering power consumption and thermal output. This approach not only mitigates the need for overprovisioning but also maintains the overall performance of the system, making the solution particularly suitable for applications with variable workloads and limited power budgets.

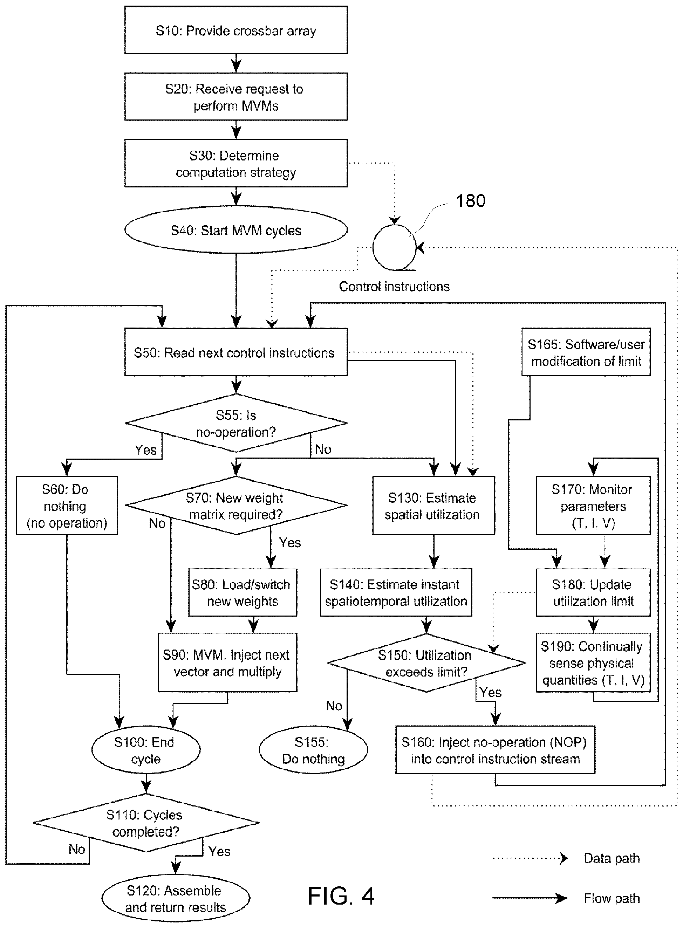

The following description is structured as follows. General embodiments and high-level variants are described in section 1, while section 2 addresses particularly preferred embodiments. Section 3 concerns technical implementation details. Note, the present method and its variants are sometimes collectively referred to as the "present methods". All references S*n* refer to methods steps of the flowcharts of FIG. 4, while numeral references pertain to devices, components, and concepts involved in embodiments of the present invention.

### 1. Main embodiments and high-level variants

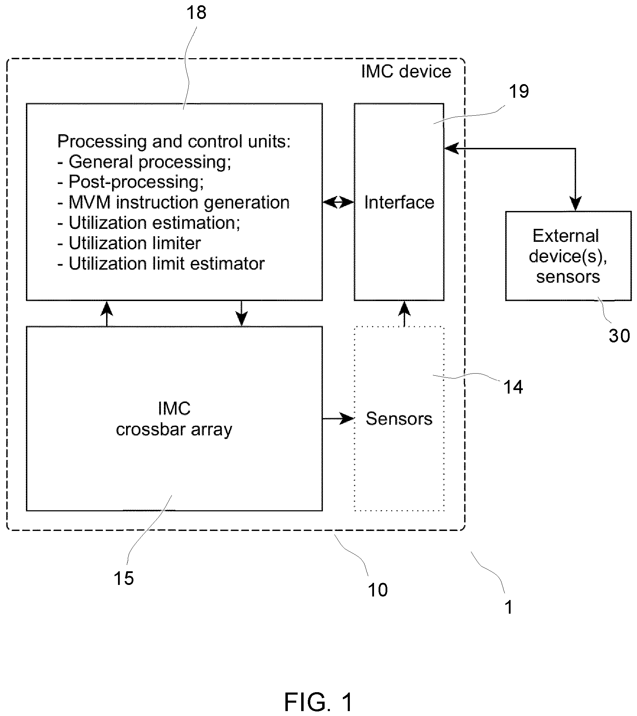

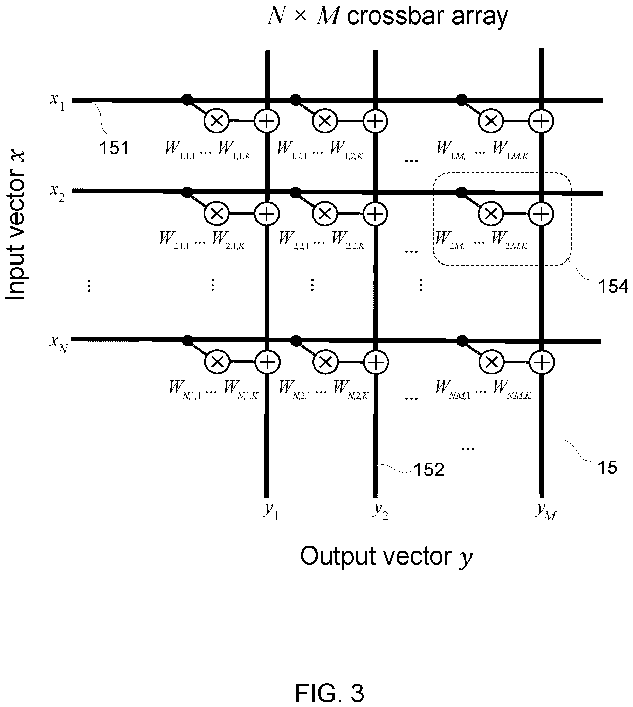

The first aspect of the invention is now described in reference to FIGS. 1 to 5. This aspect concerns computer-implemented methods of dynamically managing the load of an in-memory computing (IMC) device 10 such as shown in FIGS. 1 - 3. The core compute unit of this device is a crossbar array structure 15, which contains cells 154 configured to store weight values. So, the crossbar array structure 15 is also a memory, hence the concept of in-memory computing (also referred to as in-memory processing in the literature). The weight values are noted *W_{i,j,k}* in FIG. 3. The device 10 itself concerns another aspect of the invention (an IMC system), which is described later in detail. The method is implemented by processing means 18 of such an IMC system and can also be embodied as a computer program product, which concerns a final aspect of the invention.

The present methods involves operating the IMC device 10, see steps S40 - S120 in the flow of FIG. 4. As usual in the art, the IMC device 10 is operated according to a stream of control instructions 180, which causes the device 10 to perform operation cycles (steps S50 - S100). During these operation cycles, matrix-vector multiplication (MVM) operations are carried out (step S90) through the crossbar array structure 15 based on the weight values as stored S80 in the cells 154. The MVM operations are typically performed as multiply-accumulate (MAC) operations, based on input vectors and matrix coefficients corresponding to the weight values, as later described in detail. Note, the "load" of the device refers to the amount of work the IMC device handles at any given time. The work of the IMC device implies effective compute cycles of MVM operations.

The present methods further monitor operation conditions of the IMC device 10 (steps S130 - S150, and S170), while operating the device 10. The monitored operation conditions preferably include, or are determined based on, control instructions or quantities obtained from such control instructions. For instance, in preferred embodiments as described herein, the monitored operation conditions include a spatiotemporal utilization of the crossbar array structure. The spatiotemporal utilization includes a temporal average of the fraction of the crossbar array structure 15 that is effectively utilized according to the control instructions. This temporal average may serve as a proxy to estimate the instantaneous electric current consumption of the IMC. Additionally, the monitored operation conditions may include, or be determined based on, one or more physical quantities, such as temperatures, currents, and voltages, which are obtained through sensors 14, 30, as indicated in FIG. 1. So, the monitored operation conditions include, or be determined based on, control instructions and/or physical quantities obtained from sensors.

In both cases, the method actively adjusts the crossbar array utilization based on the monitored utilization conditions. To that aim, NOP instructions are injected into the stream of control instructions 180, see step S160 in FIG. 4. The NOP instructions are injected at a rate that is determined S150 by the monitored operation conditions. That is, the injection rate is determined in accordance with the monitored conditions. Thus, no MVM operation is performed upon reading a NOP instruction, whereas an MVM operation is performed upon reading a conventional MVM operation instruction from the stream of operation instructions. In the latter case, the MVM operation is performed in accordance with parameters as specified by the respective MVM operation instruction. As a result, in the present case, each operation cycle of the IMC device 10 contains either zero or one MVM operation.

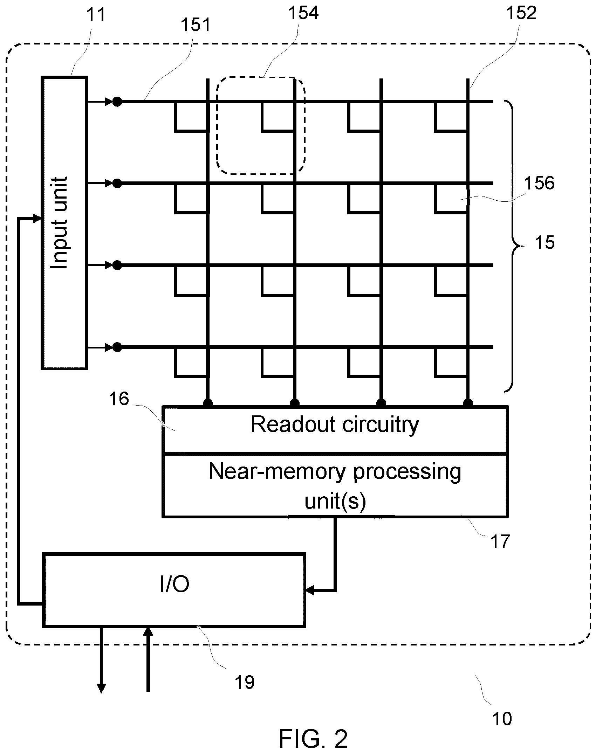

Explanations are in order. To start with, the present IMC devices (also called in-memory computing or processing engines, circuits, or apparatuses) are processing circuits involving a crossbar array structure (also called crossbar interconnect, crossbar array circuit, or simply "crossbar array"). This circuit includes input lines and output lines, which are interconnected at cross-points defining cells 154, as illustrated in FIGS. 2 and 3. The cells contain memory devices 156 designed to store weight, i.e., the matrix coefficients. Signals embodying vector components are injected into the crossbar array structure 15 through input lines 151 to perform an MVM involving the weight matrix and the input vector. Such operations are normally performed as multiply-accumulate (MAC) operations. A crossbar array architecture such as shown in FIG. 2 or 3 can map MVMs simply and efficiently, whereby such a crossbar array can efficiently perform MVMs. The weights are updated by reprogramming the memory elements, when necessary, to perform successive MVMs involving different weight matrices. As one understands, the device 10 is well suited for accelerating MVM operations-it is sometimes referred to as an MVM engine in this document.

This approach breaks the "memory wall" by fusing the arithmetic and memory unit into a single IMC unit. Processing is done more efficiently in the memory, i.e., the crossbar array, and possibly near the memory, thanks to near-memory processing units 17, see FIG. 2). Such an IMC device provides a solution to the Von-Neumann Bottleneck on the instruction interface, as a single interface instruction may suffice to operate MVMs over multiple cycles. Such devices are particularly suited for accelerating the execution of Artificial Neural Networks (ANNs), which typically involve numerous MVMs. MVM operations as contemplated herein involve one input vector at a time. They can thus be regarded as vector-matrix multiplications (VMMs), since a matrix-vector multiplication is the transpose of an MVM, or, still, as a matrix-matrix operation, where one of the matrices is a row or column vector.

In a conventional IMC device, exactly one MVM is carried out at each operation cycle. Each operation cycle is an effective compute cycle and involves exactly one MVM or, more precisely, one VMM. In the present context, however, at most one MVM is performed during any operation cycle of the crossbar array. In other words, not all operation cycles are true compute cycles, because some cycles amount to doing nothing (or, at least, not to performing any MVM). In other words, injecting NOP instructions into the instruction stream of the MVMs forces the crossbar array to do nothing during certain cycles, something that is sometimes referred to as injecting "pipeline bubbles" in the control flow. Adding such pipeline bubbles lowers the effective temporal utilization of the MVMs and hence the electric current consumption, i.e., power consumption, of the IMC device. The rate at which the pipeline bubbles are injected into the control flow can be continually modified, so as to adjust the IMC device utilization and hence its electric current consumption.

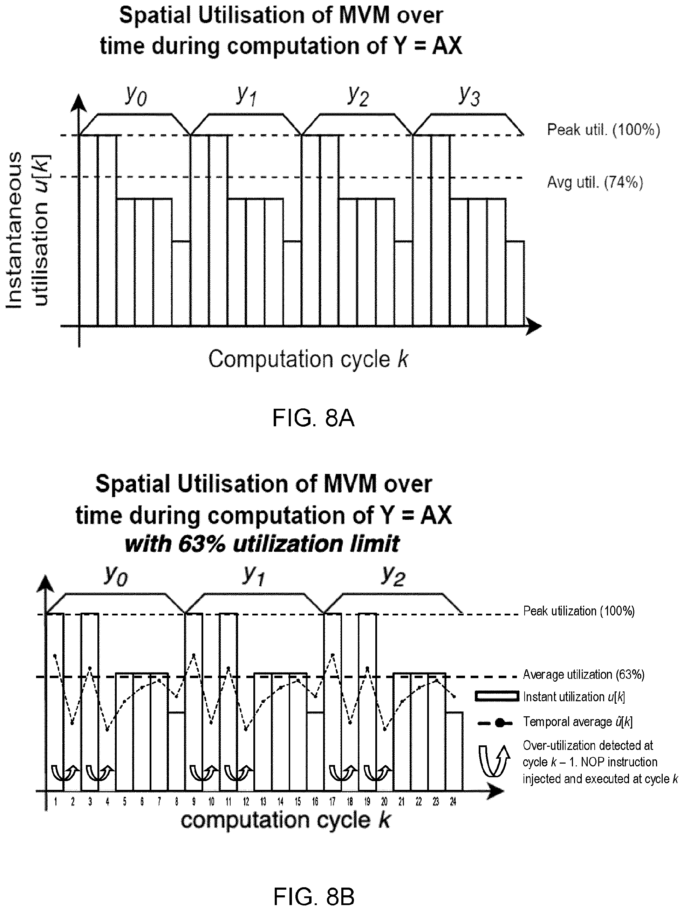

Note, the NOP instructions are preferably injected so as to be on top of any buffered MVM operation instruction in the sequential list 180 of instructions, see FIG. 4. This way, each time a NOP instruction is injected S160, the next instruction read is a NOP instruction (S55: Yes), thereby allowing immediate reactivity S60 of the system, as also illustrated in FIG. 8B. More sophisticated approaches may rely on injections of several NOP instructions, each time the current spatiotemporal utilization is found (S150: Yes) to exceed a maximal set limit, where the several NOP instructions are further distributed across the MVM instructions as currently buffered in the list 180, to allow a more subtle dynamic adjustment of power consumption.

In typical embodiments, the utilization of the crossbar array 15 is adjusted by effectively limiting its utilization during very short time periods (i.e., corresponding to one or a few consecutive operation cycles). This lowers overprovisioning requirements, inasmuch as this reduces the extent to which one would otherwise have to commit more power and thermal management resources than necessary in view of typical workloads of the IMC device. Accordingly, the present approach allows more cost-effective IMC devices to be built. Such devices no longer need to be overprovisioned for worst-case scenarios, as these rarely occur in practical workloads.

Beyond simple temporary limitations of the utilization of the IMC device, the present approach can effectively regulate the utilization of the IMC device, by temporarily lowering or increasing the utilization of the IMC device. That is, a control mechanism can be used to temporally lower the utilization of the IMC device by temporarily increasing the injection rate of pipeline bubbles, e.g., by injecting more pipeline bubbles than it did, on average, over the last few operation cycles. Conversely, the MVM utilization may also be temporarily increased (boost mode), the operation conditions permitting. A central control logic can keep track of the available power budget for the IMC device, allowing for temporarily increasing the utilization of the IMC device. The instruction dispatch can occasionally request a higher utilization from the central logic, and if granted, increase the utilization limit for some allowed amount. Thus, the present approach makes it possible to limit or boost operations performed by the IMC device, depending on the current estimated load and the power constraints of the IMC device.

Interestingly, the present approach does not substantially impact the overall performance of the IMC device. It impacts neither the frequency of the MVM cycles (the frequency is not affected; some operation cycles do simply not execute any MVM) nor the fraction of the crossbar array utilized, which would pose other challenges. Since a NOP instruction concerns one operation cycle at a time, and since NOP instructions typically concern only a small percentage of the total number of MVM operation cycles for each job, the workload is not substantially impacted, especially when MVM instructions are buffered. That is, a further advantage of this approach, as opposed to frequency scaling, is that the surrounding logic can continue to compute at the original rate and fill up input buffers with data for subsequent computation by the IMC device. This allows a precise adjustment of the utilization of the IMC device (or more precisely the IMC crowbar array structure 15), while the neighboring logic (CPU, etc.) is not affected. This works because the crossbar array is usually the most power-demanding component in IMC devices, apparatuses, or systems.

The control mechanism (i.e., the estimator and/or limiter) can be implemented in hardware or software. When implemented in hardware, the dedicated hardware component(s) purposely limit(s) or boost(s) the computational performance of the MVMs. When acting as a limiter, the control mechanism may estimate the instant MVM utilization and, if a target utilization is exceeded, inject pipeline bubbles into the control flow (i.e., more than it does on average) to lower the crossbar array utilization and hence its electric current consumption. When the operation conditions permit, the mechanism can also temporarily boost the IMC device and grant higher utilization of the crossbar array by injecting fewer pipeline bubbles than it does on average (e.g., by injecting no bubble at all). The control mechanism can also be implemented in software, particularly for slow phenomena. Conversely, a hardware limiter is preferably used for fast occurring events.

All this is now described in detail, in reference to preferred embodiments. To start with, the step of monitoring the operation conditions preferably comprises repeatedly estimating S130 - S140 a spatiotemporal utilization of the crossbar array structure 15, based on the control instructions read in the stream of control instructions 180. As noted earlier, the spatiotemporal utilization includes (or consists of) a temporal average of a fraction of the crossbar array structure 15 that is effectively utilized according to the control instructions. Note, the concept of "temporal average" should be interpreted broadly. When using discrete-time filters (as in embodiments described later), this average is obtained by merely weighting inputs and outputs corresponding to distinct time points. This temporal average can be regarded as a type of convolution, i.e., a moving time average, which is calculated thanks to successive control instructions (corresponding to successive time points), based on corresponding spatial utilizations of the fraction of the crossbar array structure 15. When using other models, such as machine-learning prediction models, this average is simply inferred, without explicitly performing an average operation.

The spatiotemporal utilization, as repeatedly estimated at steps S130 - S140, can then be monitored S150 against one or more threshold values. A single predetermined threshold value can be relied on, e.g., a maximum limit. In variants, this limit can be dynamically adapted, e.g., based on user of software inputs. Two or more threshold values may also be used. The rate at which the NOP instructions are injected depends on the monitored spatiotemporal utilization and the one or more threshold values. For example, the injection rate is increased (e.g., to a first rate value) if the estimated spatiotemporal utilization exceeds a first threshold value and the rate may be further increased (e.g., to a second rate value, larger than the first value) if the spatiotemporal utilization exceeds a second threshold value, which is larger than the first threshold value.

In preferred embodiment, the method estimates the spatiotemporal utilization of the crossbar array at each operation cycle, i.e., as often as possible. The estimated utilization is referred to as the "instant" utilization can also be regarded as the current utilization value. However, the adjective "instant" is used herein to avoid confusion with the term "current," which rather refers to electric current. In variants, some cycles can be skipped, whereby the estimation of the spatiotemporal utilization is performed during, e.g., every other operation cycle. In all cases evoked above, the temporal average serves as a proxy to estimate the instantaneous electric current consumption of the IMC device, a quantity that can adequately be used a reference to adjust the electric current consumption.

The spatiotemporal utilization of the crossbar array structure 15 is preferably estimated thanks to a prediction model, which uses the control instructions as input. The control instructions used by the prediction model correspond to one or more given time points, each corresponding to a respective cycle of the operation cycles. Using a prediction model proves beneficial for accurately estimating the instantaneous current consumption, something that would otherwise require observations on a longer time scale. This way, it is not needed to measure the current entering the crossbar interconnect, which would certainly be ideal, but also very complex in practice. Instead, use is made of an "observer," (e.g., the estimator 183) which computes an average spatiotemporal utilization over a certain time window, so as to estimate the instant current consumption over a small time period of interest. Various prediction models can be contemplated, ranging from digital filters to machine-learning models, as evoked earlier. Preferred models are state-space models, particularly discrete time-domain models, as such models are not compute-intensive and lend themselves well to real-time processing. In particular, typical discrete time-domain models usually are much less compute intensive than typical machine learning prediction model, which usually involve many more parameters.

For example, the temporal average may be estimated based on control instructions corresponding to the n most recent MVM operation cycles, where, e.g., 1 ≤ *n* ≤ 100. As noted earlier, steps S130 - S150 are preferably performed at each operation cycle, to react most rapidly to the instant spatiotemporal utilization of the crossbar array 15. Preferred prediction models as contemplated herein make use of instant updates, i.e., quantities updated based on every consecutive instant utilization, as estimated at each consecutive operation cycle. Still, when using a state-based model (such as a discrete time-domain filter), only one new set of MVM instructions need be accessed at each operation cycle to update the model, as previous estimates and previous spatial utilizations can be kept in memory.

In this regard, preferred embodiments rely on a discrete-time filter (also called discrete time-domain filter), whose time points correspond to respective operation cycles of the operation cycles. Such a discrete-time filter can be represented as a difference equation, which generally relates two or more output signals to one or more input signals. In detail, each input signal corresponds to a spatial utilization of the crossbar array structure 15 at a respective input time point. Similarly, each output signal corresponds to a temporal average as estimated at a respective output time point. Two input signals correspond to distinct time points and, similarly, two output signals correspond to distinct time points, although the time points for input and output signals partially overlap in the difference equation. Note, the time points are much preferably aligned with the MVM operation cycles, if only for simplicity, whereby the computation cycles of the prediction model are synchronous with respective operation cycles of the IMC device.

In principle, the discrete-time filter can be designed as a finite impulse response (FIR) filter or an infinite impulse response (IIR) filter. Such filters can be described by a generic formula, i.e., $\hat{u} \left[k\right] = {\sum }_{i = 0}^{P} {b}_{i} u \left[k-i\right] - {\sum }_{j = 1}^{Q} {a}_{j} \hat{u} \left[k-j\right]$*,* where *P* denotes the feedforward filter order, the coefficients *bᵢ* are the feedforward filter coefficients, *Q* is the feedback filter order, and the coefficients *aⱼ* are the feedback filter coefficients (all coefficients *aⱼ* are equal to zero for a FIR filter. So, the difference equation includes *P* + 1 input signal terms corresponding to instant and previous spatial utilizations of the crossbar array structure, where *P* ≥ 0, as well as *Q* input signal terms corresponding to inferred instant temporal averages, where *Q* ≥ 0 and *P + Q* ≥ 2. The term *û*[*k*] denotes the instant temporal average (the output signal at the instant cycle *k*)*, u*[*k*] is the instant spatial utilization, while *û*[*k - j*] and *u*[*k - i*] respectively denote previous estimates and previous spatial utilizations.

The above filter estimates the instant spatiotemporal utilization *û*[*k*] (at time *k*) of the crossbar array from instant spatial utilizations *u*[.], as obtained for the current and previous time points, taking previous observations into account. The instant spatial utilization *u*[*k*]*,* i.e., the instant input signal, can be estimated, in a first approximation, from the instant active area of the crossbar array, as the product of the numbers of active rows *wᵤ* and columns *wₜ*, as involved in given IMC operation cycle *k*, which information can be derived from the control instruction for this cycle. That is, *u*[*k*] *= wᵤ* × *wₜ*. There are different ways to implement such a digital filter, with different computational complexities and tunable parameters. A simple estimator is a first-order IIR filter, i.e., *û*[*k*] *= a*₁ *û*[*k -* 1] *+ b*₀*u*[*k*]*,* where *b*₀ can for instance be chosen to be equal to *a*₁ - 1 (e.g., *a*₁ = 0.5). This example links (i.e., relates) two output signals (at cycles *k* and *k -* 1) with one input signal (at cycle *k* - 1). More complex filters would involve a larger number of input and/or output signals.

There are several advantages to use discrete time filters as defined above, particularly in terms of programming flexibility and stability. In addition, such filters require relatively few parameters compared to other predictors, such as ML-based predictors, making them well-suited for real-time processing. Their efficiency makes them computationally less intensive and faster to implement. A single set of control instructions is accessed at each operation cycle *k* to estimate the instant spatial utilization. Previous estimates and utilizations are stored in memory, such that only the instant spatial utilization is estimated at each cycle. Preferred is to rely on an IIR filter, which requires fewer coefficients than a FIR filters to achieve essentially the same level of performance.

As illustrated above, discrete-time filters can be represented as a difference equation, which amounts to performing some kind of average (in fact, a convolution). Now, this equation may optionally include one or more correction terms, in addition to terms relating to input and output signals. The correction terms may for instance include a correction term based on statistics of operands involved in the MVM operations, and/or one or more correction terms based on information extracted from the stream of control instructions.

In general, an MVM operation on non-zero data causes a higher power draw than an MVM operation on all-zero data. That is, when considering the number of bits toggled, multiplying 0 by 0 requires less energy than multiplying, e.g., 4 by 5. One may thus advantageously monitor the actual values of the operands, based on which statistics can be obtained. Such statistics can then be used to devise a suitable correction term. As one understands, the utilization estimator may thus advantageously take into account a dependency of the current consumption on data value statistics.

In first approximation, the power consumption *P*₀ can roughly be calculated as being proportional to the instant active area of the crossbar array, hence the merits of an approach based on instant spatial utilization of the crossbar array structure. This approximation can nevertheless be improved by considering additional information from the control instructions. In particular, correction terms may advantageously include terms capturing the shape of the instant active area, i.e., *P* ≈ *a*₀*P*₀ *+ a*₁*wᵤ + a*₂*wₜ,* since the nature of in-memory computing can lead to power consumption that depends not only on the size but also on the shape of the active area. The coefficients *a*₁ and *a*₂ can for instance be optimized based on observations of real current consumptions or based on a physical model of the crossbar array.

In embodiments, the monitoring step S150 is based on a single predetermined threshold value, which is a maximal threshold value (a maximal limit). That is, the estimated spatiotemporal utilization is monitored S150 against this maximal threshold value, as assumed in FIG. 4. The NOP instructions can be injected S160 according to a control loop, represented by steps S130 - S150 in FIG. 4. The latter ensures that the estimated spatiotemporal utilization does not exceed the maximal threshold value (S150: No). The control loop may for instance be implemented by a fuzzy controller, a PID-controller, or a binary threshold controller.

Again, the estimated spatiotemporal utilization reflects only an estimate of the instant electric current consumption of the crossbar array-this estimate is necessarily affected by some estimation error. Being an instant average, the estimated spatiotemporal utilization anticipates, for a part, electric phenomena that are predicted to take place in the future, i.e., beyond the time point to which the temporal average corresponds. Short term current peaks are handled by the capacitance of the IMC device before the power supplies react to an increase in current consumption. This allows the control loop to react ahead of time before the current consumption becomes critical and the power budget is exceeded.

This reaction will be all the more accurate if the spatiotemporal utilization is estimated S140 at each operation cycle. In that case, the estimated spatiotemporal utilization is also monitored S140 - S150 against the one or more threshold values at each operation cycle. In turn, the method may decide, at each operation cycle, whether to inject a NOP instruction into the stream of control instructions 180 or not (S150: Yes/No). So, the injection rate is determined (and thus possibly modified) in accordance with a decision made at each operation cycle, as assumed in FIG. 4. This makes it possible to optimize reaction times of the control loop based on data as fresh as possible.

However, the above approach also requires performing additional computations at each operation cycle to estimate the spatiotemporal utilization at each operation cycle. So, a trade-off may be sought, especially when using a prediction model that is more computationally demanding than a discrete-time filter (e.g., a machine-learning computational model). In that case, one may for example want to skip every second cycle. More generally, the present methods may sample the input signal at any frequency (i.e., every *m* cycles, where, e.g., *m* is between 3 and 10. In that case, the spatiotemporal utilization is estimated every *m* cycles and not at each cycle. Still, the sampling frequency should remain commensurate with the desired reactivity of the system. So, *m* will preferably be less than or equal to 10, and more preferably less than or equal to 3.

The operation conditions described so far were based on the spatiotemporal utilization. However, the operation conditions monitored may additionally include physical quantities, as in preferred embodiments. In that case, the monitoring operations further comprises accessing S170 physical quantities, which are obtained S190 from one or more sensors 14, 30. Such sensors can for example include sensors 14 on board the IMC device 10, and/or external sensors 30, as seen in FIG. 1. The physical quantities may notably include a temperature of one or more components of the IMC device 10, an electric current consumption of such components, and/or supply voltage levels for such components. One may for instance rely on the temperature of the device 10, thanks to an integrated temperature sensor. In addition, any measures of the electric current consumption and/or supply voltage levels (e.g., for the central processing unit) can be used to obtain a more complete view on the instant state of the device 10.

Moreover, such quantities can advantageously be used to dynamically adjust the threshold values. That is, the method may repeatedly adjust S180 at least one of the one or more threshold values based on the physical quantities accessed S170. The method may otherwise adjust S165 the threshold values based on inputs obtained from a user or a software, as shown in FIGS. 4 - 6. Such inputs may for instance define intervals constraining the threshold values as otherwise modified S180 based on the monitored physical quantities S170.

Another aspect of the invention concerns an IMC system 1, such as depicted in FIG. 1. Functional and structural features of the IMC system 1 have already been described in reference to the present methods. Such features are only briefly described below. The system 1 comprises an IMC device 10 having a crossbar array structure 15 (see FIGS. 1 - 3) as described earlier. The system 1 further comprise processing means 18, which are preferably co-integrated with the crossbar array structure 15. That is, the IMC system 1 may actually be a single IMC device 10, e.g., a single chip. In fact, several IMC devices may be co-integrated on the same chip. Other architectures can be contemplated, as the skilled person may appreciate.

The processing means 18 are operatively coupled to a crossbar array structure 15, whereby the processing means can operate the IMC device 10 according to a stream of control instructions 180 to perform operation cycles as described earlier in reference to the present methods. That is, MVM operations are carried out through the crossbar array structure 15 in accordance with weight values stored in the cells 154. In operation, the system 1 monitors operation conditions of the IMC device 10 and injects NOP instructions into the stream of control instructions 180. The NOP instructions are injected at a rate determined in accordance with the monitored operation conditions. As a result, each operation cycle contains either zero or one MVM operation, as explained earlier.

The monitoring of the operation conditions can be performed locally at the IMC device 10. Alternatively, this monitoring is performed outside of the IMC device. Another possibility is to rely on a dual monitoring system, involving both a local and external monitoring. The local monitoring may focus on the spatiotemporal utilization of the crossbar array, estimated based on mere control instructions, although signals from on-chip sensors 14 may additionally be used. The external monitoring can involve physical quantities obtained from external sensors 30, as suggested in FIG. 1.

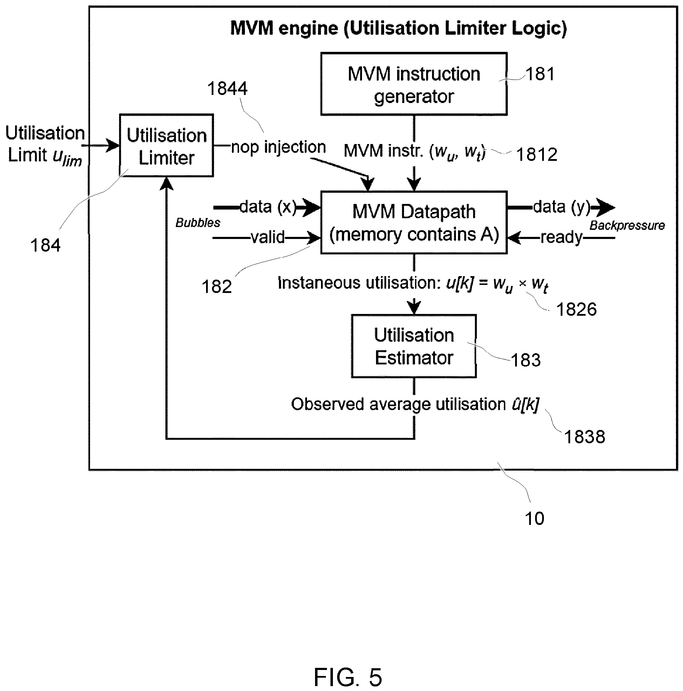

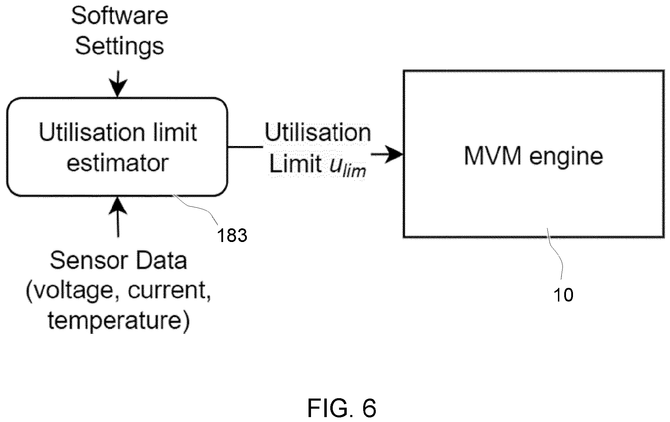

The processing means 18 may notably comprise a utilization estimator 183, as explicitly shown in FIGS. 5 and 6. The utilization estimator 183 is configured to estimate the spatiotemporal utilization 1838 of the crossbar array structure 15, based on control instructions read in the stream of control instructions 180 (see FIG. 4). As explained earlier, the spatiotemporal utilization 1838 includes a temporal average of a fraction 1826 of the crossbar array structure 15 that is effectively utilized according to the control instructions 180, in operation. The IMC system 1 is configured to monitor the estimated spatiotemporal utilization against one or more threshold values. The rate at which the NOP instructions 1844 are injected is determined in accordance with the monitored spatiotemporal utilization, in operation.

The utilization estimator 183 may possibly be implemented in software, for simplicity. In that case, the corresponding operations are typically performed by a central processing unit (CPU), forming part of the processing means 18 in FIG. 1. The CPU is preferably co-integrated with the crossbar array structure 15. However, the utilization estimator 183 is preferably implemented as a dedicated hardware component, which is distinct from the CPU, in the interest of speed. The estimator 183 takes as input the instant spatial utilization 1826 of the crossbar array, as shown in FIG. 5. In this example, the instant spatial utilization 1826 reflects each successive control instruction 1812 in the stream 180 of control instructions. Such instructions are generated by an MVM instruction generator 181.

The monitoring can be performed by conventional processing means (e.g., CPU) of the IMC device. Alternatively, the monitoring is implemented by a dedicated hardware component, distinct from the CPU and the utilization estimator, to speed up computations. A preferred approach, however, is to implement the monitoring at the utilization estimator 183, realized as a dedicated hardware component. This results in faster operation, compared with a monitoring performed by the CPU.

In addition, the IMC system 1 preferably includes a utilization limiter 184, see FIG. 5. The utilization limiter 184 is connected to both the utilization estimator 183 and the crossbar array structure 15. The utilization limiter 184 is configured to inject the NOP instructions 1844 into the stream 180 of control instructions. As noted earlier, the utilization limiter 184 and the utilization estimator 183 can advantageously be jointly configured as a control loop, to ensure that the estimated spatiotemporal utilization does not exceed a maximal threshold value. Like the utilization estimator 183, the utilization limiter 184 may be implemented in software, e.g., by the CPU. Still, it is preferably implemented as a dedicated hardware component, again in the interest of speed.

So, in preferred embodiments, the processing means 18 of the IMC device 10 include a utilization limiter 184, which is implemented as a hardware component, distinct from the CPU. And the utilization estimator 183 is preferably implemented as a hardware component that is distinct from each of the CPU and the utilization limiter 184. The utilization limiter 184 can be connected to one or more sensors 14, 30, with a view to accessing physical quantities from the sensors 14, 30. In that case, the operation conditions monitored may include such physical quantities, e.g., temperature, electric current consumption, and/or supply voltage levels.

Closely related, a final aspect of the invention concerns a computer program product for dynamically managing the load of an IMC device 10 as described earlier. The computer program product comprises a computer readable storage medium having program instructions embodied therewith. The program instructions are executable by processing means 18 of the IMC device 10, to cause the processing means to operate the IMC device in accordance with any of the present methods as described earlier in reference to the first aspect of the invention. Additional features of the computer program product are described in section 3.

The above embodiments have been succinctly described in reference to the accompanying drawings and may accommodate a number of variants. Several combinations of the above features may be contemplated. Examples are given in the next section.

### 2. Specific embodiments

### 2.1. Crossbar array structure, IMC devices and systems (FIGS. 1 - 3)

The IMC device 10 comprises a crossbar array structure 15 such as shown in FIGS. 2 and 3. I.e., the array 15 includes *N* input lines 151 and *M* output lines 152, interconnected at cross-points defining *N* × *M* cells 154. Each cell 154 includes a respective memory system 156, each designed to store *K* weights e *W_{i,j,k},* where *K* ≥ 2 (e.g., *K =* 4). The array 15 is designed to perform MAC operations. The *N* × *M* memory systems may either be digital or analog memory systems. In either case, the MAC operations may be performed in parallel or as bit-serial operations, as further discussed below. In practice, the number of input lines 151 and output lines 152 will typically be on the order of several hundreds to thousands of lines. For example, arrays of 256 × 256, 512 × 512, or 1024 × 1024 may be contemplated, although *N* need not be necessarily equal to *M.*

The device 10 further includes a selection circuit (not shown). The selection circuit is connected to the *N* × *M* memory systems 156. This circuit is generally configured to select a weight from the *K* weights of each memory system and set the selected weight as an active weight. This makes it possible to enable *N* × *M* active weights for the *N* × *M* cells 154. The device 10 also includes an input unit (or injection unit) 11, which is configured to apply signals encoding a vector of *N* components (hereafter referred to as an *N*-vector) to the *N* input lines 151 of the array 15. This causes the array 15 to perform MAC operations based on an *N*-vector and corresponding *N* × *M* active weights, as enabled by the selection circuit, in operation. In addition, a readout unit (or readout circuitry) 16 is configured to read out output signals obtained in output of the *M* output lines 152 and, if necessary, accumulate partial output values. The readout unit may include accumulators and/or memory elements storing such output values. In analog implementations, the readout unit may further include analog-to-digital converters.

Each of the *N* × *M* memory systems 156 is preferably designed so that its *K* weights are independently programmable. The device 10 may include a programming circuit (not shown), which is connected to each memory system 156. The programming circuit is configured to program the *K* weights of each of the *N* × *M* memory systems. Because the *K* weights of every memory systems are independently programmable, any of the *K* weights that is not currently set as an active weight may potentially be (re)programmed even if another one of the *K* weights is currently set as an active weight, which allows weights to be proactively loaded (prefetched), in operation.

In particular, the programming circuit may advantageously be configured to prefetch *q* sets of*N* × *M* weights that are not currently set as active weights and accordingly program the *N* × *M* memory systems 156, for the latter to store the prefetched weights in place of *q* sets of *N* × *M* weights, where 1 ≤ *q* ≤ *K -* 1. Thus, in operation, the programming circuit may program each of the *N* × *M* memory systems 156 to change the weights (see step S80 in FIG. 4) that are not currently set as active weights, while the crossbar array structure 15 is already performing MAC operations based on weights that are currently active.

Note, the programming circuit must be sufficiently independent of the compute circuit 15, so as to be able to proactively reprogram weights that are currently inactive, while the compute circuit is performing MAC operations based on the currently active weights. This independence makes it possible to proactively load those weights that will be needed for next cycles of operations. Prefetching operations may for instance be performed for several sets of weights at a time. Various prefetching schemes can be contemplated.

The present approach is compatible with analog memory elements and analog operations. In analog electrical implementations, digital inputs are transformed through digital-to-analog converters (DACs) or pulse-width modulators (PWMs) to analog representations and then applied to the input lines. Each cell operation typically corresponds to a single analog operation in that case, whereby an input signal is multiplied by a weight value carried by a memory component, as a result of an electrical interaction with that component, and branched in output to a column, effectively resulting in an analog addition operation. A preferred implementation is a digital implementation, which relies on digital memory systems. I.e., the *N* × *M* memory systems 156 are digital memory systems (e.g., each including *K* digital memory elements). In that case, each of the *N* × *M* cells 154 may comprise an arithmetic unit (including a multiplier and an adder tree), connected to a respective memory system.

The programming circuit may for instance connect a local memory unit to the configuration and control logic circuit. Although analog implementations may, in principle, reuse the input lines 151 to program the memory systems 156, a separate programming circuit is preferably provided, so as to be able to reprogram the memory systems 156 during the calculation cycles. Similarly, digital memory cells (i.e., cells comprising digital memory elements) can be connected to dedicated lines, e.g., embodying word lines and bit lines for write operations in SRAM memory devices. Note, the selection circuit may possibly re-use the word lines and bit lines for read operations. Thus, the selection circuit and the programming circuit may actually partly overlap.

The present devices 10 can notably be used for AI inferences at the edge. Besides, a computing system 1 may include one or more IMC devices 10 as described herein. The system 1 may for example have a client-server configuration, whereby users may interact with a server, with a view to performing computations. Such computations may notably require substantial matrix-matrix or matrix-vector multiplications to be performed, in which case the server may decide to offload such computations to hardware devices 10, acting as accelerators.

The system 1 may also be configured as a cloud computing system and possibly use containerization technology. I.e., the present invention may notably be embodied as a cloud computing system or be exploited as part of cloud-based services. The system 1 may further include a composable disaggregated infrastructure, which may notably include IMC devices 10, along with other hardware acceleration devices, e.g., ASICs and FPGAs.

More details can for instance be found in WO2023117081A1, WO2023193899A1, WO2024067954A1, and WO2024183892A1.

### 2.2. Preferred implementation of the estimator and limiter

Embodiments involve an adjustable hardware utilization limiter for dynamic load management in IMC devices. This limiter is a dedicated hardware component that reduces power consumption and thermal dissipation of MVMs. It estimates the MVM utilization and injects pipeline bubbles into the control flow when utilization exceeds a set limit, thereby lowering current consumption. The mechanism is selective, reacting within a few clock cycles to minimize performance impact. Utilization limits can be fixed to cap power consumption or dynamically adjusted based on system conditions like temperature, current, or voltage, as measured by sensors. Control can be implemented in software for slow phenomena or hardware for fast events. MVM utilization can also be temporarily increased in boost mode if the operation conditions allow.

Measuring precise current in the crossbar array is complex, so control data is used to determine the instant active area, providing an upper bound on power consumption, which further depends on operand data statistics. The instant (i.e., instantaneous) spatial utilization can be defined as the product of active rows and columns in each operation cycle. If the MVM unit is stalled, e.g., due to either back pressure from a downstream unit or missing available data from an upstream unit, the instant utilization is considered to be zero. In practice, the average tempo-spatial utilization over a moving time window is more relevant, reflecting current consumption over longer timescales. An observer computes this average, considering causality and minimizing response delay for stability. A fast observation filter and control response are used.

The control feedback utilizes the average spatiotemporal utilization estimate to maintain utilization within a set limit. The controller injects NOP instructions, reducing temporal utilization and current consumption. Implementation options include fuzzy, PID, or binary threshold controllers. The average utilization estimate predicts future current due to the system capacitance, allowing a proactive control.

FIG. 5 is a block diagram illustrating the utilization limiter logic within an MVM engine. The diagram shows the components involved in limiting the utilization of the crossbar array to manage power consumption and thermal output. The utilization limiter 184 works in conjunction with the utilization estimator 183 to adjust the rate of NOP instruction injection, ensuring that the estimated spatiotemporal utilization does not exceed a maximal threshold value.

In detail, the utilization estimator 183 calculates the average utilization 1838 from instant spatial utilization estimations 1826. External inputs (from user and/software) set the allowed threshold. The utilization limiter 184 injects NOP instructions to reduce the temporal utilization of the crossbar array. Spatial utilization is not affected; only the temporal utilization is adjusted. The limiter 184 relies on an estimation filter, which can be tuned. The utilization limit can be set: (i) in a static manner (fixed value to cap utilization and power consumption); (ii) in software (for a dynamic adjustment based on workloads and sensor telemetry, i.e., current, voltage, temperature); and/or (iii) in hardware, whereby a hardware limiter lowers the instant utilization based on sensor inputs to quickly respond to surges and/or ensure thermal protection.

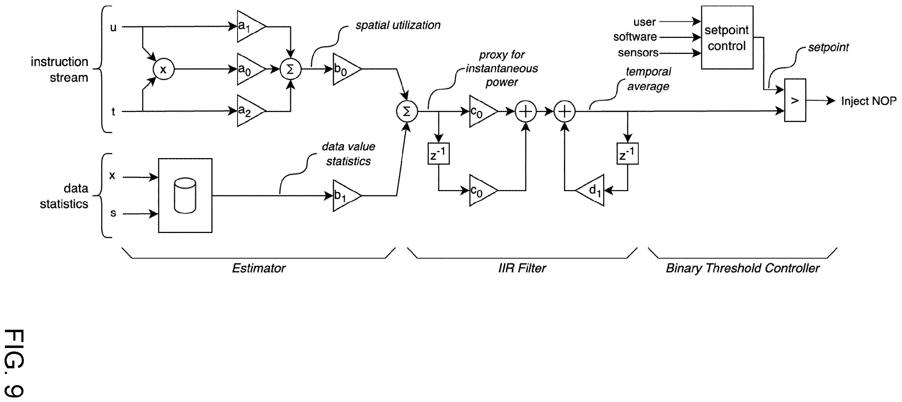

FIG. 9 illustrates the control mechanism for injecting NOP instructions based on spatial utilization and data value statistics in an IMC system. Inputs from the instruction stream provide data on the active area of the IMC device. The instant spatial utilization is estimated based on the numbers of active rows and columns. Data statistics are additionally used to refine the power consumption estimate. The instant spatial utilization and data value statistics are combined to estimate the temporal average, using an IIR filter. The setpoint control component receives input from external sources (user, software), which determines whether to maintain the same level of bubble injection ("static"), increase it ("throttle"), or decrease it ("boost"). This establishes a setpoint for the desired power consumption level, which impacts the control mechanism. The setpoint can also be adjusted based on system conditions, such as temperature, current, and voltage. The binary threshold controller compares the estimated instant power consumption against the setpoint established by the setpoint control. If the proxy exceeds the setpoint, the controller injects NOP instructions into the instruction stream, thereby lowering its current consumption. A hardware realization involves several electronic components, as indicated in FIG. 9, i.e., multipliers, adders, and delay elements. Multipliers apply coefficients to input signals, while adders combine these weighted signals to form the output. Delay elements store previous values, allowing previous data to be incorporated into current estimations.

### 2.3. Example of matrix-matrix multiplication

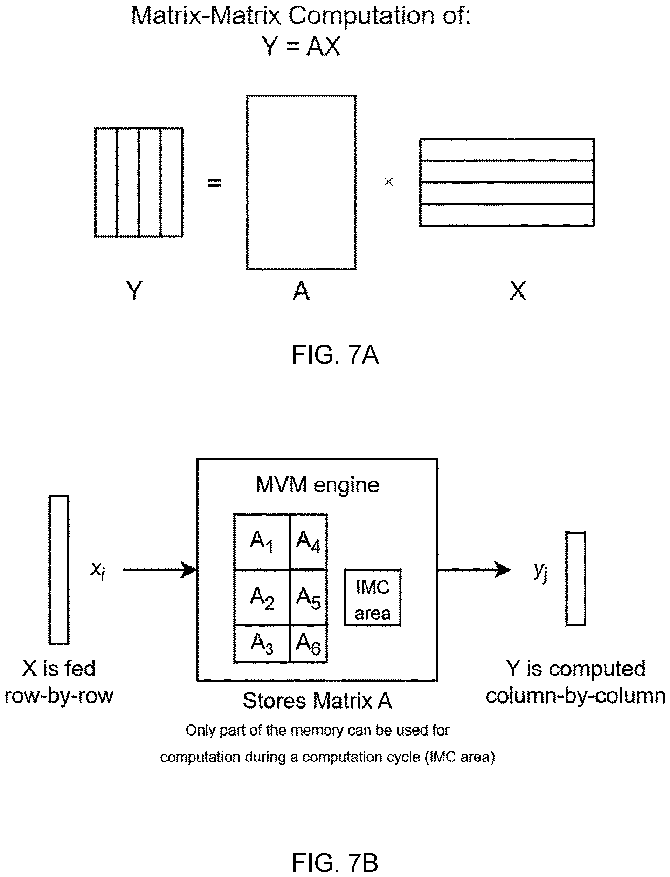

FIG. 7A illustrates a schematic diagram of a matrix-matrix computation process for Y = A.X in the context of an IMC system 1 as described above. The diagram shows matrix A being multiplied by matrix X to produce matrix Y. The computation is performed using the IMC system, which efficiently handles large-scale matrix operations by leveraging the crossbar array structure. This structure allows for parallel processing of matrix elements, enhancing computational speed and efficiency.

FIG. 7B illustrates how the weight matrix A is stored within the MVM engine, with matrix X fed row-by-row into the engine (one row corresponds to one input vector *xᵢ*). The output matrix Y is accordingly computed column-by-column (one column corresponds to one output column vector *yⱼ*). The MVM operation is performed by the IMC area (i.e., the crossbar array), based on input signals encoding the input vector and the weight values as currently set in the crossbar array.

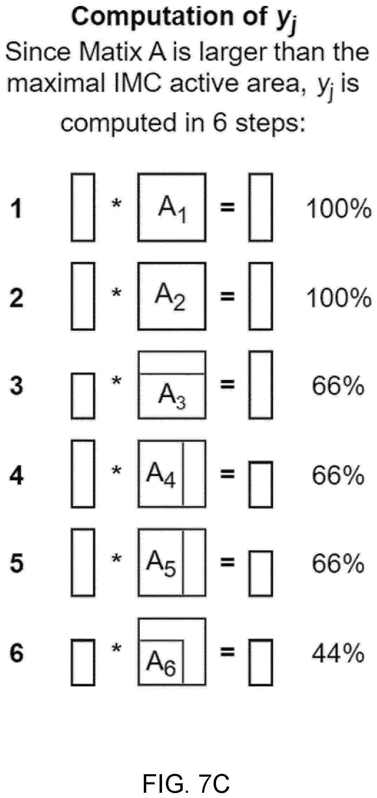

FIG. 7C illustrates the computation of *yⱼ* in six steps: The matrix A is assumed to exceed the maximal IMC area in this example. Therefore, each input vector-matrix computation is broken down into six substeps: the IMC system manages large matrices by segmenting the computation process. Each substep involves a respective portion of matrix A (i.e., A₁, A₂, ..., A₆), with varying levels of instant utilization (going from 100% to 44%), fitting within the area limits of the IMC device.

FIG. 8A is a graph illustrating how the spatial utilization of the IMC array 15 evolves over time during the computation of Y = A.X, for successive calculations of column vectors *yⱼ* (*j =* 0, 1, 2, and 3), highlighting peak and average utilization levels. The graph provides a visual representation of how utilization varies throughout the computation process. It shows that, while the instant utilization *u*[*k*] peaks at 100% during each computation cycle *k,* the average utilization is equal to 74%.

FIG. 8B illustrates a scenario, in which the limiter is engaged, effectively limiting the maximal utilization to 63% over successive operation cycles. A simple first-order IIR filter is used to estimate the temporal average, i.e., *û*[*k*] *= a*₁*û*[*k -* 1] *+ b*₀*u*[*k*], where *b*₀ *= a*₁ - 1 = 0.5. Each time the temporal average is detected, which exceeds the utilization limit, i.e., 63 %, a NOP instruction is injected (as denoted by a curved-up arrow). This instruction appears on top of the sequential MVM instructions, such that the next operation is a no-operation, as seen in the chart. As a result, the effective operations are shifted. Note, although the operation cycles shown start at *k* = 1, the chart assumes that previous operations took place, such that the first temporal average value is equal to 76 % in this example. As a result of the successive limitations taking place, the average value of the temporal averages is close to 55 % in this example. The successive NOP injections cause to slightly delay the overall compute time.

Of course, the above example is deliberately simplistic (so is the mapping proposed in FIGS. 7A - 7C). In reality, more sophisticated mapping strategies can be implemented, if only to limit frequent utilization peaks and thus avoid frequent NOP injections. Furthermore, other phenomena may be involved (notably in the filter estimations), which may result in slightly different utilization values.

### 2.4. Example of flow (simplified)

FIG. 4 illustrates a detailed flow chart for dynamically managing load in an IMC device through control instructions and utilization monitoring. The process begins at step S10, where the crossbar array is provided. At step S20, a request to perform MVMs is received (e.g., for inferencing purposes). The computation strategy is determined at step S30, setting the stage for the operation cycles.

The MVM cycles commence at step S40, guided by the stream S180 of control instructions. At step S50, the next control instruction is read. Step S55 checks if the latest instruction is a NOP instruction. If so, no operation is performed S60 during the current cycle. Else, the process checks S70 whether a new weight matrix is required. If needed, new weights are loaded or switched S80, prior to moving to step S90. It directly moves to step S90 if no new weights are needed. Note, in practice, steps S70 and S80 are preferably performed in a proactive manner, by proactively fetching the next weights, as explained in section 2.1, whereby steps S70 and S80 are implemented as a concurrent process and the weights are ready for switching. The MVM operation (step S90) is performed by injecting the next vector and multiplying its components by the current weights. The cycle concludes at step S100. A check at step S110 determines if all cycles are completed. If not, the process returns to step S50 to continue reading instructions, and so on. Once completed, results are assembled and returned at step S120.

Parallel to these operations, the instant spatial utilization of the crossbar array is estimated at step S130. The instant spatiotemporal utilization (i.e., the moving time average) is estimated at step S140. A check at step S150 determines if the spatiotemporal utilization exceeds a given threshold. If so, NOP instructions are injected into the control instruction stream 180 at step S160, else nothing more is required S155.

The utilization limit can be modified by software or user inputs at step S165. Parameters such as temperature (T), current (I), and voltage (V) are continually monitored at step S170. Based on these, the utilization threshold (limit) is updated at step S180. Physical quantities are continually sensed at step S190, providing real-time data to inform adjustments in the utilization limit. Of course, the comprehensive flow of FIG. 4 is purposely simplified.

### 3. Technical implementation details

Computerized devices 10 and systems 1 can be suitably designed for implementing embodiments of the present invention as described herein. It can be appreciated that the methods described herein are essentially non-interactive, i.e., automated. Automated parts of such methods can be implemented as a combination of hardware and software. In exemplary embodiments, automated parts of the methods described herein are implemented using software executed by suitable digital processing devices. However, all embodiments described here involve computations performed thanks to crossbar array structures adapted to store weights, possibly using prefetching and accumulation capability of the IMC devices 10.

Still, the methods described herein may typically involve executable programs, scripts, or, more generally, any form of executable instructions, be it to instruct to perform and adjust core computations at the crossbar array 15 of the device 10. The required computer readable program instructions can for instance be downloaded to processing elements from a computer readable storage medium, via a network, for example, the Internet and/or a wireless network.

Aspects of the present invention are described herein notably with reference to a flowchart and block diagrams. It will be understood that each block, or combinations of blocks, of the flowchart and the block diagrams can be implemented thanks to computer readable program instructions. The flowchart and the block diagram in the accompanying drawings illustrate the architecture, functionality, and operation of possible implementations of the devices 10 and, systems 1 involving such devices, methods of operating them, and computer program products, according to various embodiments of the present invention.

While the present invention has been described with reference to a limited number of embodiments, variants, and the accompanying drawings, it will be understood by those skilled in the art that various changes may be made, and equivalents may be substituted without departing from the scope of the present invention. In particular, a feature (device-like or method-like) recited in a given embodiment, variant or shown in a drawing may be combined with or replace another feature in another embodiment, variant, or drawing, without departing from the scope of the present invention. Various combinations of the features described in respect of any of the above embodiments or variants may accordingly be contemplated, that remain within the scope of the appended claims. In addition, many minor modifications may be made to adapt a particular situation or material to the teachings of the present invention without departing from its scope. Therefore, it is intended that the present invention is not limited to the particular embodiments disclosed, but that the present invention will include all embodiments falling within the scope of the appended claims. In addition, many other variants than explicitly touched above can be contemplated. For example, other types of memory elements, selection circuits, and programming circuits can be contemplated.

### REFERENCE LIST

- 1: In-memory compute (IMC) system
- 10: IMC device
- 11: Input unit
- 14: On-chip sensors
- 15: IMC crossbar array structure (crossbar interconnect)
- 16: Readout circuitry
- 17: Near-memory processing unit(s)
- 18: Processing and control units
- 19: Interface
- 30: External device(s), sensors
- 151: Input lines
- 152: Output lines
- 154: Cells
- 156: Cross-points
- 180: Control instruction stream
- 181: MVM instruction generator
- 182: MVM Datapath
- 183: Utilization estimator
- 184: Utilization limiter
- 1812: MVM instructions
- 1826: Instant utilization
- 1838: Estimated ("observed") average utilization
- 1844: NOP instructions

## Claims

1. A computer-implemented method of dynamically managing a load of an in-memory computing (IMC) device (10), which has a crossbar array structure (15) of cells (154) configured to store weight values, wherein the method comprises:
operating (S40 - S120) the IMC device (10) according to a stream of control instructions (180) to perform (S50 - S100) operation cycles, whereby matrix-vector multiplication (MVM) operations are carried out (S90) through the crossbar array structure (15) in accordance with weight values stored (S80) in the cells (154);
monitoring (S130 - S150, S170) operation conditions of the IMC device (10); and
injecting (S160) no-operation instructions into the stream of control instructions (180) at a rate determined (S150) in accordance with the monitored operation conditions, whereby each operation cycle of said operation cycles contains either zero or one MVM operation.

2. The computer-implemented method according to claim 1, wherein monitoring the operation conditions comprises:
repeatedly estimating (S130 - S140), based on control instructions in the stream of control instructions (180), a spatiotemporal utilization of the crossbar array structure (15), wherein the spatiotemporal utilization includes a temporal average of a fraction of the crossbar array structure (15) that is effectively utilized according to said control instructions; and
monitoring (S150) the spatiotemporal utilization as repeatedly estimated against one or more threshold values, whereby the rate at which the no-operation instructions are injected (S160) depends on the monitored spatiotemporal utilization and the one or more threshold values.

3. The computer-implemented method according to claim **2,** wherein
the spatiotemporal utilization of the crossbar array structure (15) is estimated (S140) thanks to a prediction model using said control instructions as input, wherein the control instructions used by the prediction model as input correspond to one or more given time points, each corresponding to a respective cycle of the operation cycles, and
the prediction model preferably comprises a state-space model, and more preferably a discrete-time filter.

4. The computer-implemented method according to claim **3,** wherein
the prediction model comprises a discrete-time filter, whose time points correspond to respective operation cycles of the operation cycles, and
the discrete-time filter can be represented as a difference equation, which relates two or more output signals to one or more input signals, where
each of the input signals corresponds to a spatial utilization of the crossbar array structure (15) at a respective one of said time points, and
each of the output signals corresponds to a temporal average estimated at a respective one of said time points.

5. The computer-implemented method according to claim **4,** wherein
said difference equation includes, in addition to terms relating to said output signal and said input signal, one or more correction terms, the correction terms including one or each of:
a correction term based on statistics of operands involved in the MVM operations; and
one or more correction terms based on information extracted from the stream of control instructions.

6. The computer-implemented method according to any one of claims **2** to **5,** wherein
the one or more threshold values include a maximal threshold value, whereby the estimated spatiotemporal utilization is monitored (S150) against said maximal threshold value,
the no-operation instructions are injected (S160) according to a control loop (S130 - S150) ensuring that the estimated spatiotemporal utilization does not exceed (S150: No) said maximal threshold value, and
said control loop is optionally implemented by one of:
a fuzzy controller,
a PID-controller, and a
binary threshold controller.

7. The computer-implemented method according to any one of claims **2** to **6,** wherein
the spatiotemporal utilization is estimated (S140) at said each operation cycle,
the estimated spatiotemporal utilization is monitored (S140 - S150) against said one or more threshold values at said each operation cycle, and
the method further comprises, at said each operation cycle, deciding (S150: Yes/No) whether to inject a no-operation instruction into the stream of control instructions (180) or not.

8. The computer-implemented method according to any one of claims **2** to **7,** wherein
monitoring the operation conditions further comprises accessing (S170) physical quantities obtained (S190) from one or more sensors (14, 30), whereby the operation conditions monitored include the physical quantities accessed in addition to said spatiotemporal utilization, and
the physical quantities including one or more of:
a temperature of one or more components of the IMC device (10),
an electric current consumption of the one or more components, and
supply voltage levels for the one or more components.

9. The computer-implemented method according to claim **8,** wherein
the method further comprises repeatedly adjusting (S180) at least one of the one or more threshold values based on the physical quantities accessed (S170), and
the method optionally comprises repeatedly adjusting (S180) at least one of the one or more threshold values based on inputs obtained (S165) from a user or a software.

10. An in-memory computing (IMC) system (1) comprising:
an IMC device (10) having a crossbar array structure (15) of cells (154) configured to store weight values; and
processing means (18) operatively coupled to the crossbar array structure (15), wherein the processing means are configured to:
operate the IMC device (10) according to a stream of control instructions (180) to perform operation cycles, whereby matrix-vector multiplication (MVM) operations are carried out through the crossbar array structure (15) in accordance with weight values stored in the cells (154), in operation;
monitor operation conditions of the IMC device (10); and
inject no-operation instructions into the stream of control instructions (180) at a rate determined in accordance with the monitored operation conditions, whereby each operation cycle of said operation cycles contains either zero or one MVM operation, in operation.

11. The IMC system (1) according to claim **10,** wherein
the processing means comprises a utilization estimator (183),
the utilization estimator (183) is configured to estimate, based on control instructions in the stream of control instructions (180), a spatiotemporal utilization of the crossbar array structure (15), the spatiotemporal utilization reflecting a temporal average of a fraction of the crossbar array structure (15) that is effectively utilized according to said control instructions, in operation, and
the IMC system (1) is configured to monitor the estimated spatiotemporal utilization against one or more threshold values, whereby the rate at which the no-operation instructions are injected is determined in accordance with the monitored spatiotemporal utilization, in operation.

12. The IMC system (1) according to claim **11,** wherein
the processing means further comprises a utilization limiter (184),
the utilization limiter (184) is connected to both the utilization estimator (183) and the crossbar array structure (15),
the utilization limiter (184) is configured to inject said no-operation instructions into the stream of control instructions (180), and
the utilization limiter (184) and the utilization estimator (183) are jointly configured as a control loop, so as to ensure that the estimated spatiotemporal utilization does not exceed a maximal threshold value, in operation.

13. The IMC system (1) according to claim **12,** wherein
the processing means includes a central processing unit,
the utilization limiter (184) is implemented as a hardware component of the IMC device (10) that is distinct from the central processing unit, and
the utilization estimator (183) is preferably implemented as a hardware component of the IMC device (10) that is distinct from each of the central processing unit and the utilization limiter (184).

14. The IMC system (1) according to claim **12** or **13,** wherein
the utilization limiter (184) is further connected to one or more sensors (14, 30), so as to obtain one or more physical quantities from said sensors, whereby the operation conditions monitored include said one or more physical quantities, in operation, and
the one or more physical quantities include one or more of:
a temperature of one or more components of the IMC device,
an electric current consumption of the one or more components, and
supply voltage levels for the one or more components.

15. A computer program product for dynamically managing a load of an in-memory computing (IMC) device, which has a crossbar array structure (15) of cells (154) configured to store weight values, the computer program product comprising a computer readable storage medium having program instructions embodied therewith, the program instructions executable by processing means (18) of the IMC device, to cause the processing means to:
operate the IMC device according to a stream of control instructions (180) to perform operation cycles, whereby matrix-vector multiplication (MVM) operations are carried out through the crossbar array structure (15) in accordance with weight values stored in the cells (154);
monitor operation conditions of the IMC device; and
inject no-operation instructions into the stream of control instructions (180) at a rate determined in accordance with the monitored operation conditions, whereby each operation cycle of said operation cycles contains either zero or one MVM operation.
